# EUROPEAN PATENT APPLICATION

(11) **EP 3 637 493 A1**
(43) Date of publication of application: **15.04.2020**
(21) Application number: 19176564.3
(22) Date of filing: 24.05.2019
(51) Int. Cl.: H01M 2/02, H01M 2/04, H01M 10/46, B60L 53/00

(54) **BATTERY CONTAINER**

(30) Priority: 09.10.2018 TW 107213689 U
(71) Applicant: Kwang Yang Motor Co., Ltd., Kaohsiung City 80794 (TW)
(72) Inventor: SU, Huang-Wen, 80275 Kaohsiung City (TW); YU, Wen-Pin, 80773 Kaohsiung City (TW); TSAI, Sz-Wei, 81152 Kaohsiung City (TW)
(74) Representative: Vinsome, Rex Martin

(57) **Abstract**

A battery container (1) is adapted to be disposed at a battery charging station (9) for containing a battery (8) . The battery container (1) includes a container body (10), a cover (18), and a resilient member (19). The container body (10) defines a receiving space (100) adapted for receiving the battery (8), and an opening (103) being in spatial communication with the receiving space (100) . The cover (18) is connected to the container body (10) and is pivotable between a shut position, where the cover (18) blocks the opening (103), and an opened position, where the cover (18) unblocks the opening (103) such that insertion of the battery (8) into the receiving space (100) via the opening (103) is permitted. The resilient member (19) is disposed for biasing the cover (18) towards the shut position.

## Description

The disclosure relates to a battery container, more particularly to a battery container of a battery charging station.

With the recent rapidly growing popularity of electric vehicles, battery charging stations are becoming commonplace as the main charging facility. The conventional battery charging station has a complex structure with a large number of electronic parts in order to achieve commercial cloud monitoring, safe charging and to provide convenience for users, which can increase the cost of setting up the conventional battery charging station as well as making repairs difficult.

Furthermore, to start a battery charging process at the conventional battery charging station, a user usually needs to operate a control panel of the battery charging station before the user may open a cover of a charging slot, which is inconvenient in its slowness. The security of the charging slot and protection of the inner components of the charging slot from water and dust are also important issues that must be improved upon.

Therefore, the object of the disclosure is to provide a battery container that can alleviate at least one of the drawbacks of the prior art.

According to the disclosure, a battery container is adapted to be disposed at a battery charging station for containing a battery. The battery container includes a container body, a cover, and a resilient member.

The container body defines a receiving space adapted for receiving the battery, and an opening being in spatial communication with the receiving space.

The cover is connected to the container body and is pivotable between a shut position, where the cover blocks the opening, and an opened position, where the cover unblocks the opening such that insertion of the battery into the receiving space via the opening is permitted.

The resilient member is disposed for biasing the cover towards the shut position.

Other features and advantages of the disclosure will become apparent in the following detailed description of the embodiment with reference to the accompanying drawings, of which:
FIG. 1 is a front view of an embodiment of a battery container according to the disclosure disposed at a battery charging station;
FIG. 2 is an exploded perspective view of the embodiment and a battery;
FIG. 3 is a perspective view illustrating the battery inserted into the embodiment;
FIG. 4 is a perspective partially cutaway view, illustrating a cover of the embodiment in an opened position;
FIG. 5 is a perspective view of the embodiment and the battery from a different angle to FIG. 3;
FIG. 6 is a perspective view of a locking mechanism of the embodiment;
FIG. 7 is a partially sectional view, illustrating the cover at a shut position;

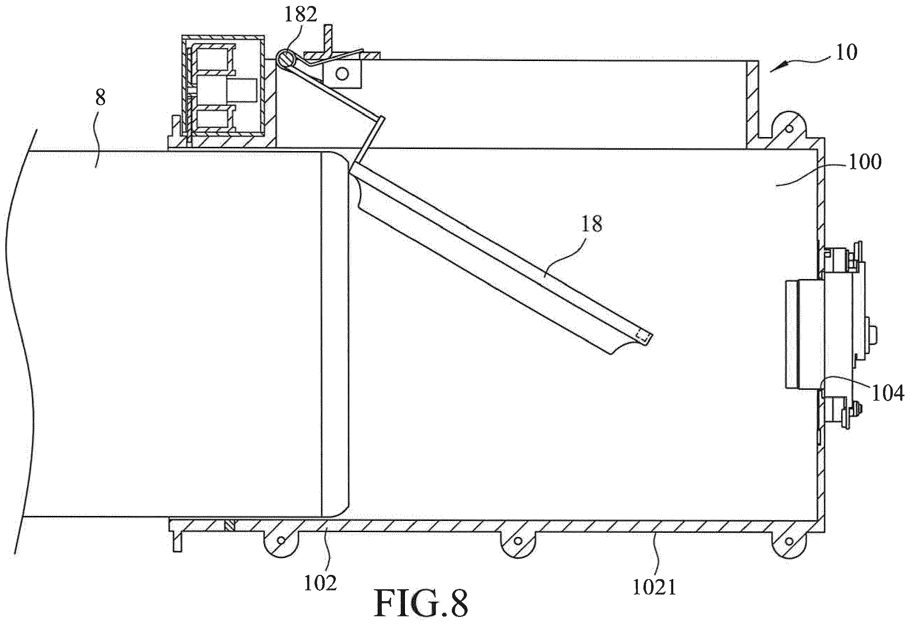

FIG. 8 is a partially sectional view, illustrating the cover in between the shut position and the opened position, and the battery being partially inserted into the embodiment; and
FIG. 9 is a partially sectional view, illustrating the cover in the opened position and the battery fully inserted into the embodiment.

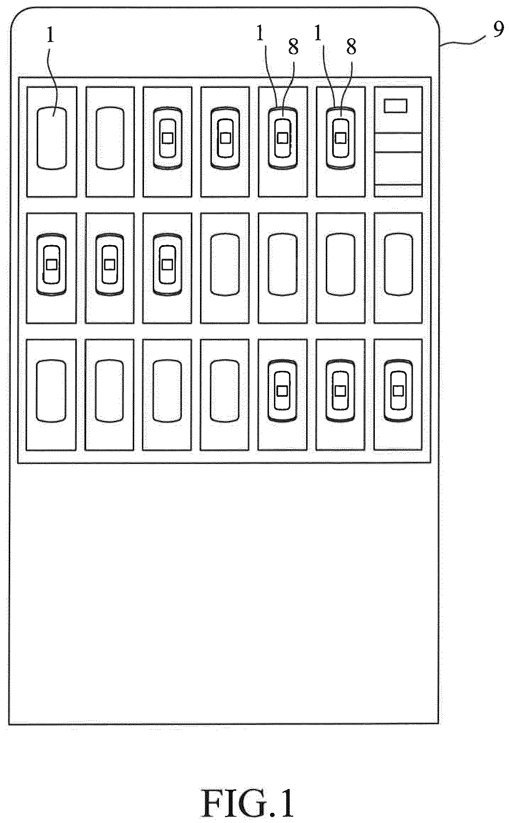

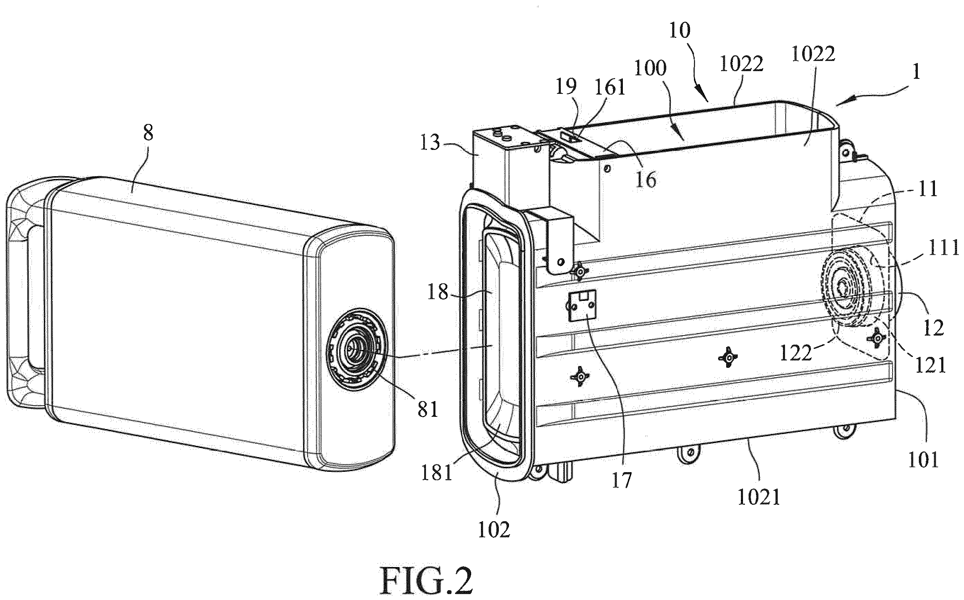

Referring to FIGS. 1 and 2, an embodiment of a battery container 1 is adapted to be disposed at a battery charging station 9 for containing a battery 8 that has a charging port 81. As shown in FIG. 1, the battery charging station 9 is configured to contain a plurality of the battery containers 1 in order to charging multiple batteries 8 at the same time.

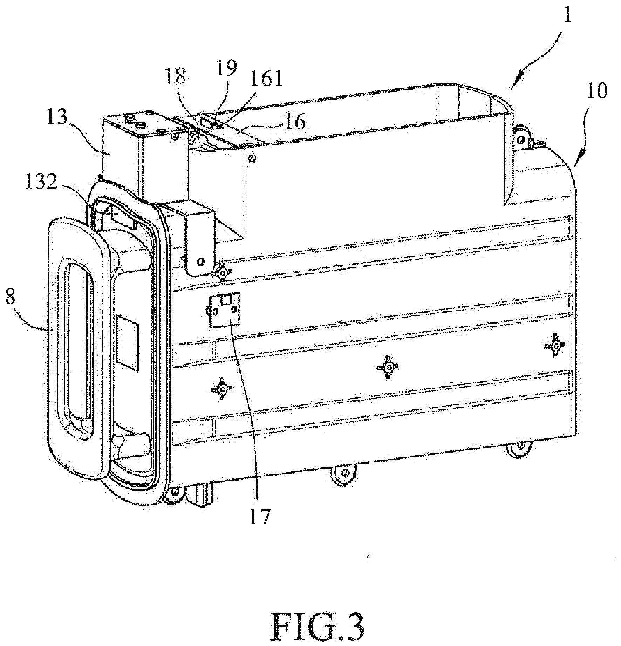

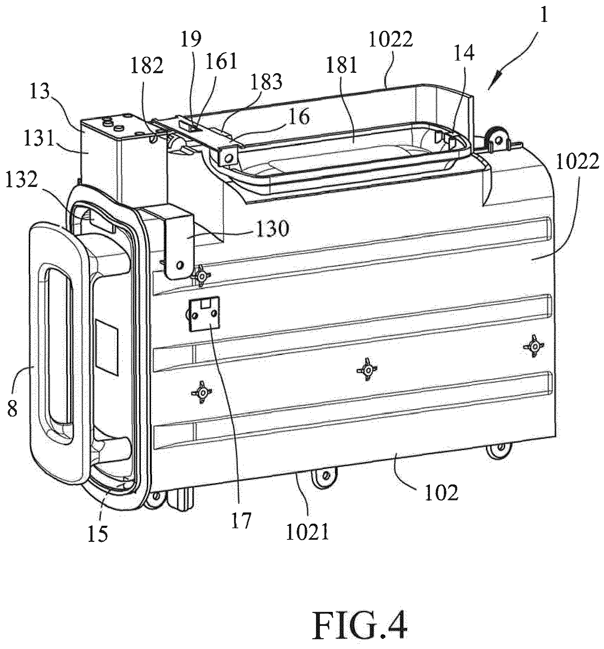

Referring to FIGS. 2 to 5, the battery container 1 includes a container body 10, a coupling board 11, a floating connecter 12, a locking mechanism 13, two sensors 17, a cover 18, a resilient member 19, a stopping member 16, and first and second attracting members 14, 15 (see FIG. 4).

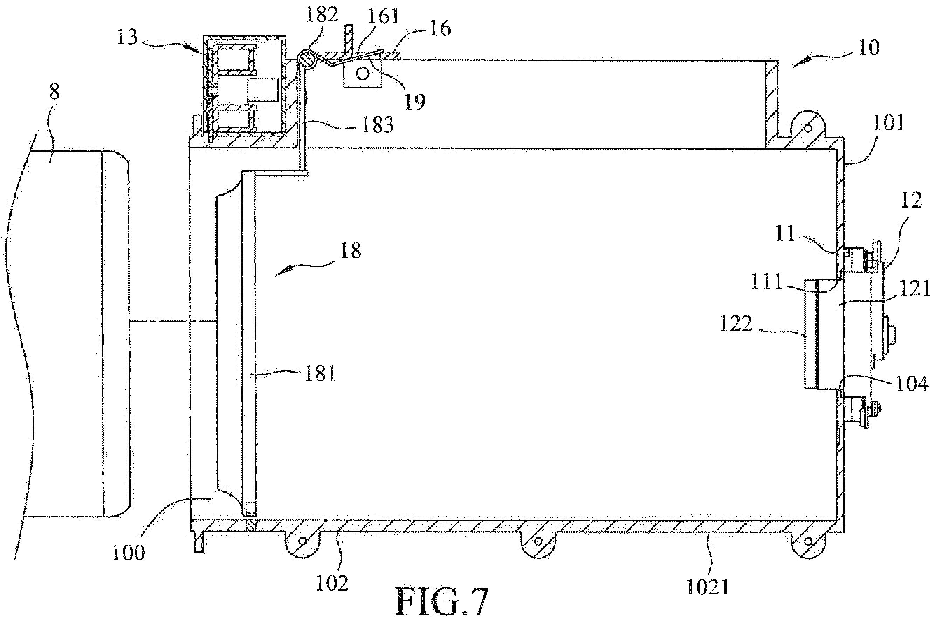

The container body 10 includes a rear wall 101, and a surrounding wall 102 extending forwards from the rear wall 101. The rear wall 101 and the surrounding wall 102 cooperatively define a receiving space 100 adapted for receiving the battery 8. The surrounding wall 102 defines an opening 103 (see FIG. 7) being in spatial communication with the receiving space 100. Specifically, the surrounding wall 102 includes a bottom wall segment 1021 and two side wall segments 1022 extending upwards from the bottom wall segment 1021. Referring to FIG. 4, the stopping member 16 is mounted to the side wall segments 1022 of the surrounding wall 102 of the container body 10. In this embodiment, the stopping member 16 is a sheet metal member.

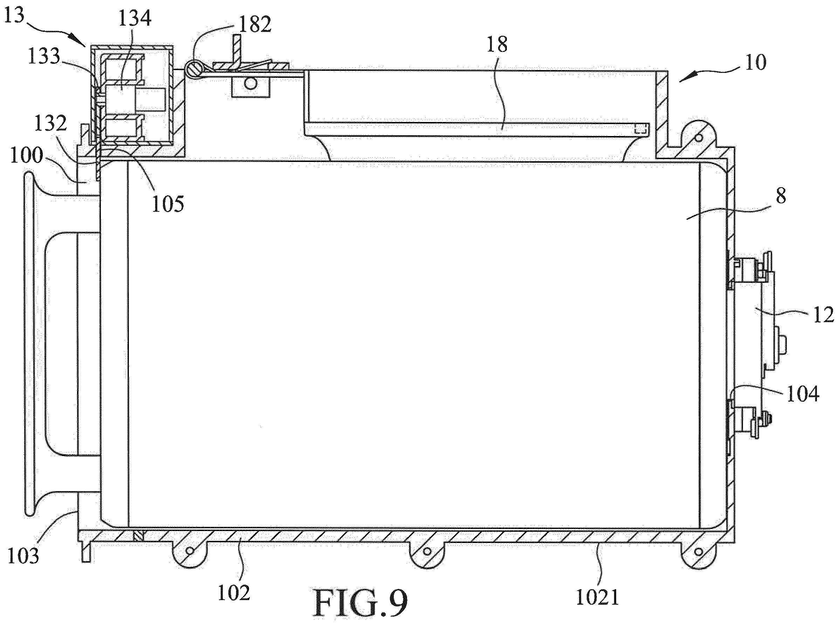

The coupling board 11 is movable along a plane which is parallel to the rear wall 101, and defines a through hole 111 that is registered with an installation hole 104 (see FIG. 7) formed in the rear wall 101. In this embodiment, the coupling board 11 is inside of the receiving space 100, that is, when the battery 8 is inserted into the receiving space 100 (see FIG. 9), the coupling board 11 is disposed between the battery 8 and the rear wall 101.

Referring to FIGS. 2 and 7, the floating connector 12 is movably disposed through the installation hole 104 formed on the rear wall 101, and fixedly mounted to the coupling board 11. As such, the floating connector 12 is movable together with the coupling board 11 relative to the container body 10 . The floating connector 12 includes a through portion 121 movably disposed in the installation hole 104 of the rear wall 101 and fixedly disposed in the through hole 111 of the coupling board 11, and a connector portion 122 extending from the extending portion 121 and electrically connectable with the charging port 81 of the battery 8.

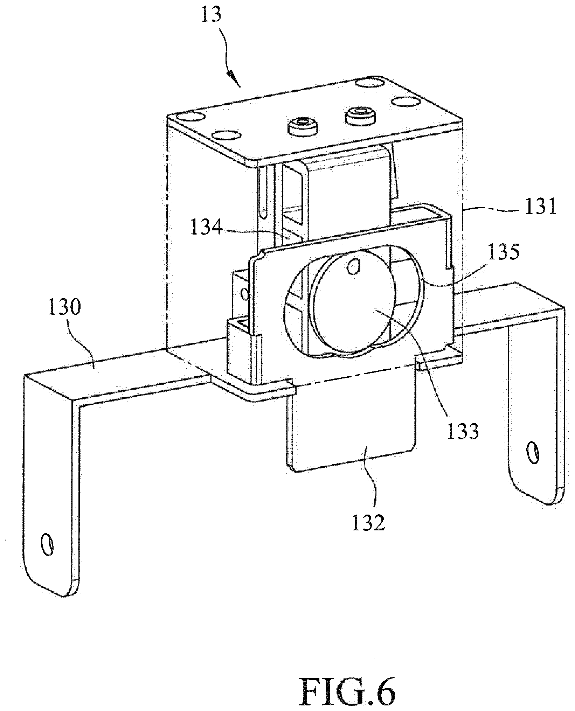

Referring to FIGS. 4, 6 and 9, the locking mechanism 13 is mounted to the surrounding wall 102 of the container body 10 and is proximal to the opening 103. The locking mechanism 13 includes a securing stand 130 mounted to the surrounding wall 102, a containing box 131 disposed on the securing stand 130, a tab 132 disposed in the containing box 131 and having a slot 135, a cam 133 disposed in the containing box 131 and movable within the slot 135 of the tab 132, and a driver 134 disposed in the containing box 131 and configured to drive eccentric rotation of the cam 133. The locking mechanism 13 is operable to extend into the receiving space 100 to lock the battery 8 inside the battery container 1 during a charging process, and to be withdrawn from the receiving space 100 to release the battery 8 when the charging process is finished so that the battery 8 is permitted to be extracted from the receiving space 100.

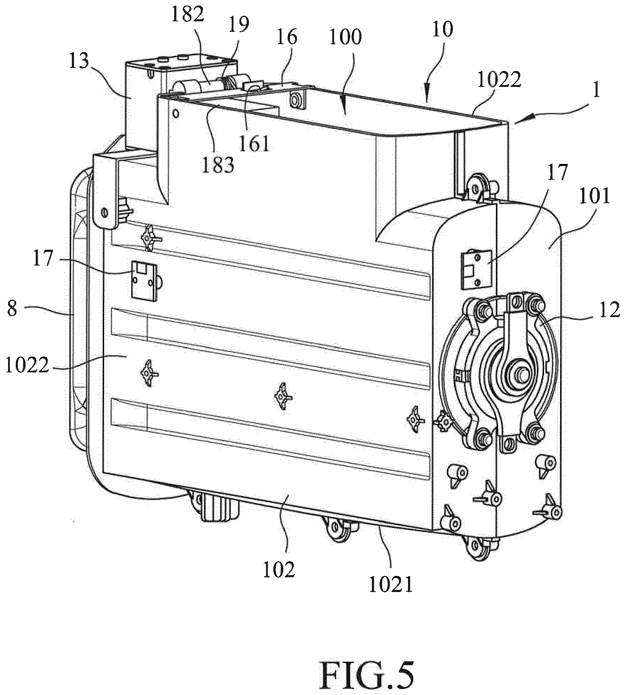

The sensors 17 are disposed on an outer surface of the container body 10 for detecting a position of the battery 8 within the receiving space 100. Referring to FIGS. 4 and 5, the two sensors 17 are respectively disposed on an outer surface of the surrounding wall 102 and the rear wall 101. The sensor 17 which is disposed on the surrounding wall 102 is proximal to the locking mechanism 13.

Referring to FIGS. 2, 7 and 9, the cover 18 is connected to the container body 10 and is pivotable between a shut position (FIG. 7), where the cover 18 blocks the opening 103, and an opened position (FIG. 9), where the cover 18 unblocks the opening 103 such that insertion of the battery 8 into the receiving space 100 via the opening 103 is permitted. The cover 18 includes a cover body 181, a hinge 182 connected to the surrounding wall 102 of the container body 10, and a connecting portion 183 interconnecting the cover body 181 and the hinge 182. The cover body 181 and the connecting portion 183 pivot about the hinge 182 when the cover 18 is moving between the shut and open positions. The cover body 181 blocks the opening 103 when the cover 18 is at the shut position. In this embodiment, the cover 18 is pivoted inwards into the receiving space 100 when the cover 18 is moved from the shut position to the opened position. In this embodiment, at the opened position, the cover body 181 is disposed at an upper portion of the receiving space 100 and is substantially parallel to the bottom wall segment 1021 of the surrounding wall 102. The stopping member 16 abuts against the connecting portion 183 of the cover 18 when the cover is at the opened position to limit the pivot action of the cover 18.

The resilient member 19 is disposed for biasing the cover 18 towards the shut position and for ensuring that the cover 18 is returned quickly to the shut position once the battery 8 is removed from the battery container 1. The stopping member 16 has a securing hole 161. The resilient member 19 has one end abutting against the connecting portion 183 of the cover 18, and another end extending through the securing hole 161 and abutting against a periphery of the securing hole 161.

Referring further to FIG. 4, in this embodiment, the first attracting member 14 is disposed on an end of the cover body 181 of the cover 18 which is distal to the connecting portion 183, and the second attracting member 15 is disposed on an outer surface of the surrounding wall 102 of the container body 10. The first and second attracting members 14, 15 are mutually attracted when the cover 18 is at the shut position. In this embodiment, the first and second attracting members 14, 15 are magnets.

Referring to FIGS. 1, 2, 4, and 7, when the battery 8 is not yet inserted into the receiving space 100 for charging, the cover 18 automatically remains fixedly at the shut position due to the resilient member 19 and the first and second attracting members 14, 15, without computer or manual control. Thus a user may tell at a glance whether the battery container 1 is occupied. Then, when the battery 8 is being inserted into the battery container 1, the battery 8 pushes against the cover 18 such that the cover 18 pivots upwards about the hinge 182 to permit insertion of the battery 8 into the receiving space 100. At this point, the sensor 17 which is disposed proximal to the opening 103 will detect the battery 8.

Referring to FIGS. 5 and 9, when the battery 8 is electrically connected to the floating connector 12 and the sensor 17 which is disposed on the rear wall 101 detects the battery 8, the driver 134 of the locking unit 13 is activated to drive eccentric rotation of the cam 133, driving the tab 132 downwards and through a slit 105 of the surrounding wall 102 and into the receiving space 100, thereby locking the battery 8 in the receiving space 100.

Once the battery 8 has finished charging and the user has gone through identification and payment procedures, the charging port 81 of the battery 8 is electrically disconnected from the floating connector 12 and the driver 134 drives further eccentric rotation of the cam 133 to drive the tab 132 upwards through the slit 105 and out of the receiving space, at which point the battery 8 is removable from the receiving space 100.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure . It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A battery container (1) adapted to be disposed at a battery charging station (9) for containing a battery (8), said battery container (1) including a container body (10) that defines a receiving space (100) adapted for receiving the battery (8), and an opening (103) being in spatial communication with said receiving space (100),
**characterized in that** said battery container (1) further includes:
a cover (18) that is connected to said container body (10) and that is pivotable between a shut position, where said cover (18) blocks said opening (103), and an opened position, where said cover (18) unblocks said opening (103) such that insertion of the battery (8) into said receiving space (100) via said opening (103) is permitted; and
a resilient member (19) that is disposed for biasing said cover (18) towards the shut position.

2. The battery container (1) as claimed in claim 1, **characterized in that**:
said container body (10) includes a rear wall (101) and a surrounding wall (102) extending forwards from said rear wall (101), said rear wall (101) and said surrounding wall (102) cooperatively defining said receiving space (100), said surrounding wall (102) defining said opening (103); and
said cover (18) includes a cover body (181), a hinge (182) connected to said surrounding wall (102) of said container body (10), and a connecting portion (183) interconnecting said cover body (181) and said hinge (182), said cover body (181) and said connecting portion (183) pivoting about said hinge (182) when said cover (18) is moving between said shut and open positions, said cover body (181) blocking said opening (103) when said cover (18) is at the shut position.

3. The battery container (1) as claimed in claim 2, **characterized in that** said battery container (1) further includes a first attracting member (14) disposed on an end of said cover body (181) of said cover (18) which is distal to said connecting portion (183), and a second attracting member (15) disposed on an outer surface of said surrounding wall (102) of said container body (10), said first and second attracting members (14, 15) being mutually attracted when said cover (18) is at the shut position.

4. The battery container (1) as claimed in claim 3, **characterized in that** said first and second attracting members (14, 15) are magnets.

5. The battery container (1) as claimed in any one of claims 2 to 4, **characterized in that**:
said cover (18) is pivoted inwards into said receiving space (100) when said cover (18) is moved from the shut position to the opened position; and
said battery container (1) further includes a stopping member (16) mounted to said surrounding wall (102) of said container body (10), and abutting against said connecting portion (183) of said cover (18) when said cover (18) is at said open position to limit the pivot action of said cover (18), said resilient member (19) having two ends respectively abutting against said connecting portion (183) of said cover (18) and said stopping member (16).

6. The battery container (1) as claimed in claim 5, **characterized in that** said stopping member (16) is a sheet metal member.

7. The battery container (1) as claimed in any one of the previous claims, **characterized by** a locking mechanism (13) mounted on said surrounding wall (102) of said container body (10) and proximal to said opening (103), said locking mechanism (13) being operable to extend into said receiving space (100) to lock the battery (8) inside said battery container (1) during a charging process, and to be withdrawn from said receiving space (100) to release the battery (8) when the charging process is finished so that the battery (8) is permitted to be extracted from said receiving space (100).
